# EUROPÄISCHE PATENTSCHRIFT

(11) **EP 2 614 198 B1**
(45) Veröffentlichungstag und Bekanntmachung des Hinweises auf die Patenterteilung: **07.01.2015**
(21) Anmeldenummer: 11793660.9
(22) Anmeldetag: 29.11.2011
(51) Int. Cl.: E04H 6/18, E04H 6/30, B60S 13/00

(54) **VORRICHTUNG UND VERFAHREN ZUM AUTOMATISCHEN QUEREINLAGERN EINES KRAFTFAHRZEUGES IN EINER LAGEREINRICHTUNG**
DEVICE AND METHOD FOR AUTOMATICALLY LATERALLY STORING A MOTOR VEHICLE IN A STORING DEVICE
DISPOSITIF ET PROCÉDÉ PERMETTANT LE PARCAGE TRANSVERSAL AUTOMATIQUE D'UN VÉHICULE À MOTEUR DANS UN PARKING

(30) Priorität: 29.11.2010 DE 102010052850
(43) Veröffentlichungstag der Anmeldung: 17.07.2013
(73) Patentinhaber: serva transport systems GmbH, 83355 Grabenstätt (DE)
(72) Erfinder: MEIRER, Leopold, 83246 Unterwössen (DE); KOCH,Rupert, 81667 München (DE); BELLAFLOR, Cary, Thomas, 81673 München (DE)
(74) Vertreter: Pfenning, Meinig & Partner GbR
(86) Internationale Anmeldenummer: PCT/EP2011/005983
(87) Internationale Veröffentlichungsnummer: WO 2012/072236

(56) Entgegenhaltungen:
- WO-A1-2004/045932
- DE-A1- 3 909 702
- DE-A1- 4 216 457
- DE-A1-102006 053 528
- FR-A- 1 437 539
- KR-A- 20070 113 190
- US-A- 2 899 087

## Beschreibung

Die Erfindung betrifft eine Vorrichtung und ein Verfahren zum automatischen Einlagern eines Kraftfahrzeuges quer zu seiner Längsachse auf einem Stellplatz einer Lagereinrichtung.

Bei bekannten automatischen Parkhäusern kommen fest installierte Transportroboter oder auf Paletten basierende Systeme zum Einsatz, um Fahrzeuge automatisch zu parken. Es erweist sich als schwierig, Fahrzeuge von einer Stellfläche aufzuheben und zu transportieren, da die Bodenfreiheit von Fahrzeugen nur einen geringen Platz für Transportmaschinen zur Verfügung stellt. Im heutigen Straßenverkehr sind verschiedenste Fahrzeuggrößen vertreten: Kleinwagen mit sehr geringem Radstand, aber auch Fahrzeuge wie beispielsweise SUVs der Oberklassen mit maximalem Radstand. Dies erschwert das Einparken mit einem automatischen System und führt zu einem nicht effizient genutzten Parkhaus, da die unterschiedlich ausgeprägten Fahrzeuge auf gleich großen Stellplätzen geparkt werden. Der Längenunterschied zwischen Kleinwagen und Fahrzeugen der Oberklasse beträgt bei Standardmodellen bis zu 3500 mm. In bekannten automatischen Parkanlagen - wie in der KR20070113190 A beschrieben - kann keine oder nur geringe Rücksicht auf die verschiedenen Fahrzeuggrößen genommen werden. Auf Paletten basierende Systeme haben eine Standardpalettengröße und werden meist so ausgelegt, dass sie nur Fahrzeuge bis zu 5000 mm Länge einparken, um eine gewisse Effizienz zu erreichen. Automatische Parksysteme, die - wie in der WO2004045932A1 beschrieben - Fahrzeuge in Fahrtrichtung (Längsrichtung) aufnehmen, können Fahrzeuge nicht in unterschiedlich großen Parkplätzen parken, da die Länge des Transportsystems der maximalen Länge der zu parkenden Fahrzeuge entspricht. Auch bei Aufnahmeeinrichtungen, die aus zwei Aufnahmewagen bestehen - wie in der US 2899087 A oder der DE 3909702 A1 beschrieben - ist ein Parken auf verschieden großen Parkplätzen nur in ganz geringem Maß möglich. Dies wird deshalb in bekannten automatischen Parksystemen nicht angewendet, da konstruktionstechnische Probleme es unmöglich machen, die Aufnahmewagen so klein zu gestalten, dass sie Fahrzeuge genau Stoßstange an Stoßstange parken können. Des Weiteren können bekannte Parksysteme mit Aufnahmewagen maximal 2 Fahrzeuge in einer Reihe parken. Da die Fahrzeuggrößen so stark variieren, ist es also auch mit dieser Lösung nicht möglich, Fahrzeuge wirklich effizient zu parken.

Ein weiteres Problem der heute bekannten automatischen Parkanlagen ist, dass eine Maschineneinheit in einem Systemabschnitt für ca. 40 bis 80 Fahrzeuge zuständig ist. In einem automatischen Parkhaus von 300 Stellplatzen ergeben sich somit 4 Systembereiche, welche von je einer Maschineneinheit bedient werden. Das bedeutet, dass im Falle eines Systemausfalles nicht auf ein geparktes Fahrzeug in dem entsprechenden Zuständigkeitsbereich der Maschine zugegriffen werden kann, da entweder die Palette, die Fahrzeugaufnahmeeinrichtungen oder der Förderaufzug das System blockiert. Bei keinem der bekannten Systeme ist es möglich, eine weitere Maschine aus einem anderen Systemabschnitt anzufordern, um die Fahrzeuge auszulagern.

Des Weiteren ist es bei bekannten automatischen Parkanlagen nicht möglich, dass mehrere Paletten oder Fahrzeugaufnahmeeinrichtungen im Parallelbetrieb im gleichen Systemabschnitt miteinander arbeiten, wenn beispielsweise gleichzeitig mehrere Fahrzeuge aus dem gleichen Systemabschnitt angefordert werden. Die Fahrzeuge können also nicht parallel schnellstmöglich ausgelagert werden. Dies ist nicht möglich, da die Maschinen baulich, d.h. meist durch eine lineare Führung, an ihre Position gebunden sind.

Bei bekannten automatischen Parkgaragen können Fahrzeuge bei komplettem Anlagenausfall nicht manuell ausgelagert werden. Weder können Fahrzeuge, die sich auf einer Palette befinden, noch können Fahrzeuge, die mit Aufnahmeeinrichtungen in einem Hochregallager aus Stahl oder Beton eingelagert worden sind, bewegt werden.

Bekannte Parksysteme können auch nicht ohne großen baulichen Aufwand in schon existierende Parkhäuser eingebaut werden. Bei den bekannten Systemen wird auch nach einem aufwendigen Umbau von einer traditionellen Parkanlage in eine automatische Parkanlage kein bedeutend besserer Flächennutzungsgrad erreicht, da die Fahrzeuge - wie bereits erläutert - nicht entsprechend ihrer Größe geparkt werden können.

Des Weiteren findet bei heute bekannten Parksystemen keine Kommunikation zwischen Kunden und dem Parksystem statt. Der einzige Kontakt zum Kunden findet anonym am Kassenautomaten statt.

In einer bekannten Vorrichtung gemäß DE 42 16 457 C2 sind horizontal und senkrecht zur Verfahrrichtung des Fördermittels ausfahrbare und unter das Kraftfahrzeug fahrbare Greifarme angebracht. Die parallel angebrachten Greifarme sind teleskopartig ausfahrbar und können zu beiden Seiten des Fördermittels ausgefahren werden. Das Fördermittel kann sich horizontal oder vertikal bewegen. Es ist schwierig, mit dieser Art von Fördermittel mehrere Fahrzeuge in Querrichtung nebeneinander zu parken, da die Greifarme bei drei parallel geparkten Fahrzeugen etwa 6600 mm ausfahren mussten. Auch ist es schwierig, bei weit ausgefahrenen Greifarmen die Belastung durch das aufgenommene Fahrzeug am Ende der teleskopartigen Greif arme aufzunehmen. Das Anheben des Kraftfahrzeuges erfolgt dort alleine durch das Angreifen der gegeneinander bewegten Greif arme an den Radreifen. Für den Transport wird das Kraftfahrzeug auf einer Stellfläche des Fördermittels abgestellt.

Der Erfindung liegt das Problem zugrunde, schwere Kraftfahrzeuge quer zu ihrer Längsachse mehrfachtief auf Stellplätze einer Lagereinrichtung einzulagern und dabei möglichst wenig Platz vor und hinter dem Kraftfahrzeug zu verschwenden und dabei Flächenbeweglichkeit und zugleich Standfestigkeit des Transportmittels zu gewährleisten.

Gelöst wird dieses Problem bei einer Vorrichtung nach Patentanspruch 1 dadurch, dass an dem Transportmittel jeweils endseitig flächenbewegliche Abstützungen angeordnet sind, die sich horizontal und parallel zu den Gabelpaaren erstrecken und beim Unterfahren der Räder durch die Gabelpaare an dem Kraftfahrzeug front- und heckseitig mit geringem Abstand vorbeifahren, dass der Abstand zwischen den Abstützungen verstellbar ist, dass eine Messeinrichtung vor der Aufnahme des Kraftfahrzeuges dessen Länge, Achspositionen und der Position des Kraftfährzeuges im Raum ermittelt, dass das flächenbewegliche, fahrerlose Transportmittel mit den von der Messeinrichtung übermittelten Daten seine durch den Abstand der Abstützungen bestimmte Länge und die Position der Gabelpaare selbsttätig an die Maße des aufzunehmenden Kraftfahrzeuges anpasst, und dass die beim Anheben des Kraftfahrzeuges aufgenommene Belastung einerseits durch das Transportmittel und andererseits durch die flächenbeweglichen Abstützungen auf die Fahrfläche übertragen wird.

Ebenso wird dieses Problem gelöst durch ein Verfahren mit dem im Anspruch 5 angegebenen Verfahrensablauf.

Vorteilhafterweise ist das Transportmittel bei Aufnahme des Kraftfahrzeugs mit einer Längsrichtung parallel zu einer Längsachse des Kraftfahrzeugs angeordnet, wobei die Längsrichtung des Transportmittels jene senkrecht zu den Gabeln und den Abstützungen und parallel zur Fahrfläche stehende Richtung ist. Die Längsrichtung des Kraftfahrzeugs sei jene Richtung, in welche das Kraftfahrzeug fährt, wenn es geradeaus fährt. Vorteilhaft ist das Transportmittel bei Aufnahme des Kraftfahrzeugs neben dem Kraftfahrzeug angeordnet.

Die Gabelpaare sind einseitig an dem Transportmittel angeordnet, was bedeutet, dass sie nur an einer Seite des Transportmittels angeordnet und/oder befestigt sind. Vorzugsweise erstrecken sich alle Gabeln aller Gabelpaare vom Punkt ihrer Befestigung aus in die gleiche Richtung.

Die Gabelpaare unterfahren die Räder des Kraftfahrzeugs vorzugsweise nur von einer Seite aus, nämlich in jene Richtung, in die sich die Gabeln von ihrem Befestigungspunkt an dem Transportmittel erstrecken.

Die mit der Erfindung erreichten Vorteile bestehen insbesondere darin, Kraftfahrzeuge flächenoptimiert einzulagern. Dieser Vorteil entsteht insbesondere durch die mehrfachtiefe Einlagerung quer zur Fahrtrichtung und die Einlagerung der Kraftfahrzeuge in verschieden große Stellplatzreihen. Dadurch wird ein minimaler Abstand zwischen den Fahrzeugen garantiert und somit werden die heute deutlich unterschiedlichen Fahrzeuglängen beim Einparken berücksichtigt. Des Weiteren ist durch das flächenbewegliche fahrerlose Transportmittel ein Parallelbetrieb in dem automatischen Parksystem möglich; da z.B. im Vergleich zu einem Hochregallager gleichzeitig in mehreren Ebenen und mit mehreren fahrerlosen Transportmitteln gleichzeitig auf einer Ebene gefahren werden kann. Durch die Standsicherheit des flächenbeweglichen fahrerlosen Transportmittels sind keine Führungen wie z.B. Schienen am Boden der Lagereinrichtung notwendig, was der Flexibilität des Systems zu Gute kommt.

Ein Ausführungsbeispiel der Erfindung wird anhand der Zeichnung näher erläutert. Es zeigen:
- Figur 1:: Eine Draufsicht des flächenbeweglichen fahrerlosen Transportmittels
- Figur 2:: Eine Draufsicht des flächenbeweglichen fahrerlosen Transportmittels mit aufgenommenem Kraftfahrzeug
- Figur 3:: Eine Draufsicht der Übergebestation
- Figur 4:: Eine Draufsicht der Lagereinrichtung
- Figur 5:: Eine Draufsicht des flächenbeweglichen Transportmittels mit einem Balken als Vorrichtung zur Längenverstellung

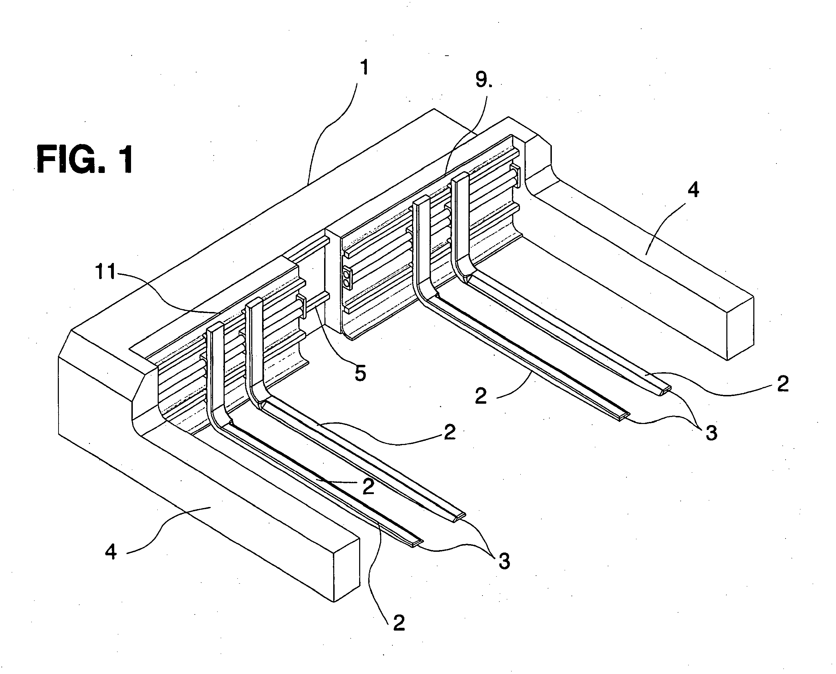

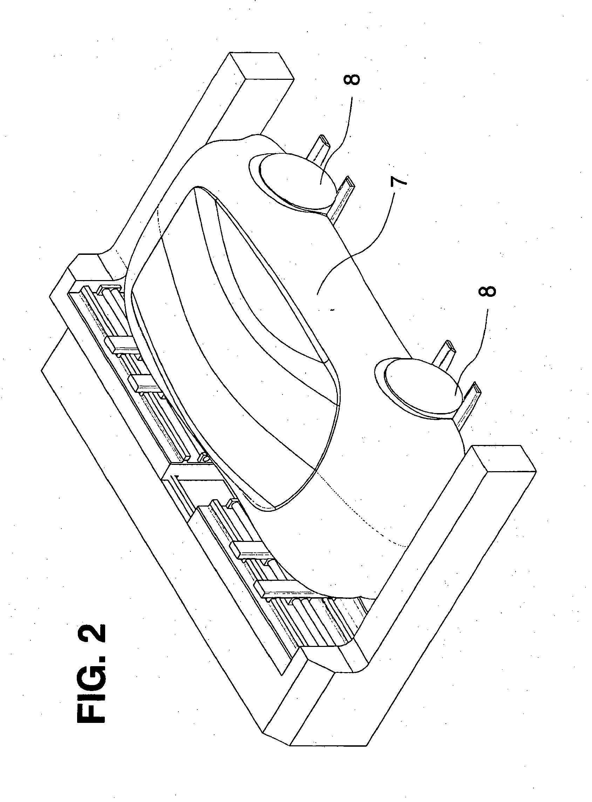

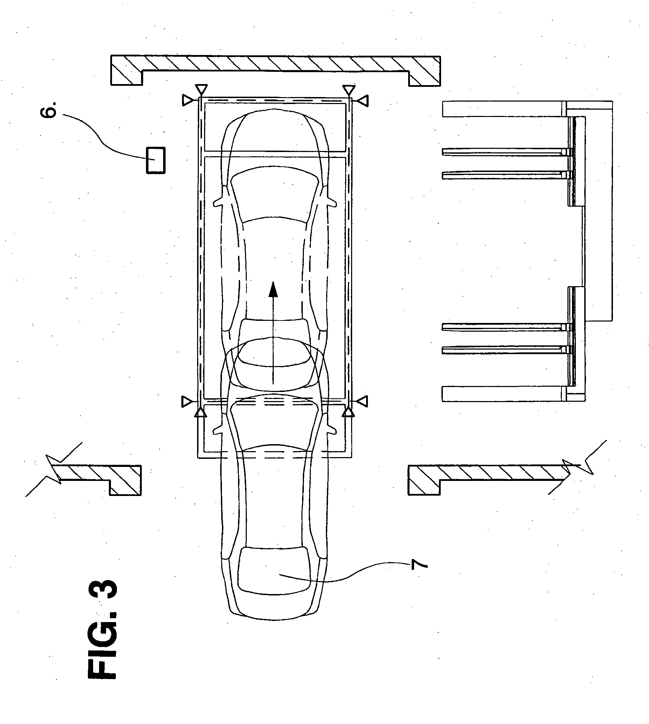

Das in den Figuren 1 bis 3 dargestellte flächenbewegliche fahrerlose Transportmittel (1) weist an seinen Enden parallel neben den Gabelpaaren (3) flächenbewegliche Abstützungen (4) auf, welche neben dem Transportmittel einen Teil der Belastung durch das Kraftfahrzeug (7) aufnehmen und ein Kippen verhindern. Die Gabelpaare (3) sind an einer Seite an dem flächenbeweglichen fahrerlosen Transportmittel (1) befestigt und einzeln verschiebbar, auf der anderen Seite sind sie freitragend. Um nun mit dem flächenbeweglichen fahrerlosen Transportmittel (1) unterschiedlich lange Kraftfahrzeuge (7) aufnehmen zu können ist an dem flächenbeweglichen fahrerlosen Transportmittel (1) der Abstand zwischen den Abstützungen (4) in der Länge durch eine Verschiebeeinrichtung (5), z. B. eine linear geführte, elektrisch betriebene Spindel, verstellbar und kann somit vor der Aufnahme des Kraftfahrzeuges (7) auf dessen Länge angepasst werden. Die flächenbewegliehen Abstützungen (4) sind nach dem Einsteilvorgang an einer Seite fest am flächenbeweglichen fahrerlosen Transportmittel (1) fixiert und geben die Belastung über eine flächenbewegliche Einrichtung, z.B. Rollen oder Räder, die schwenkbar ausgebildet sein können, an den Boden weiter.

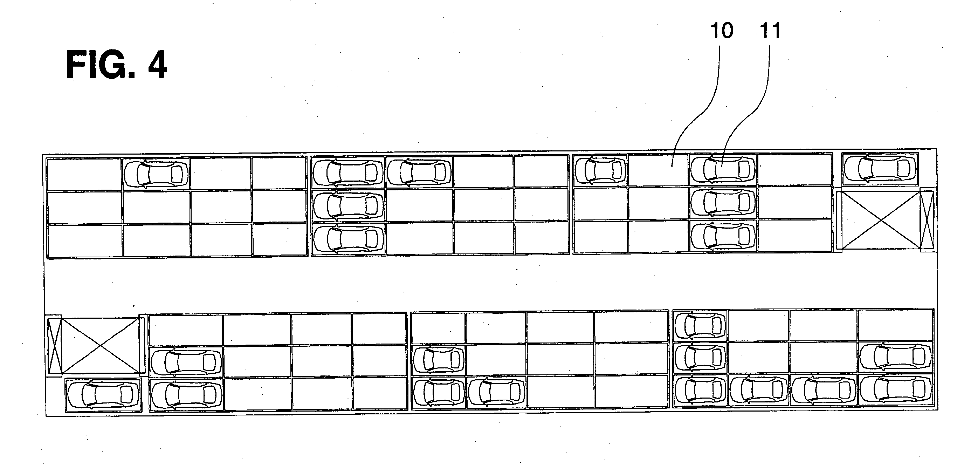

Die Länge, die Achspositionen und die Position des Kraftfahrzeuges (7) im Raum werden durch eine Messeinrichtung (6) ermittelt. Dabei werden auch der vordere und hintere Überhang des Kraftfahrzeuges (7) bestimmt. Das flächenbewegliche fahrerlose Transportmittel (1) bekommt die Länge und Achsenposition des aufzunehmenden Kraftfahrzeuges (7) durch die Meßeinrichtung (6) mitgeteilt und passt nun seine Länge über die Verschiebeeinheit (5) und die Positionen der Gabeln (2) auf das zu parkende Kraftfahrzeug (7) an und unterfährt mit den Gabelpaaren (3) das Kraftfahrzeug (7). Dies ist besonders vorteilhaft, da durch die Längenanpassung des flächenbeweglichen fahrerlosen Transportmittels (1) beim Einlagern des Kraftfahrzeuges (7), wie in Figur 4 dargestellt, in verschieden große Stellplätze (10 und 11) gefahren werden kann. Besonders vorteilhaft ist es zur optimalen Ausnutzung der Fläche des Parksystems, Kraftfahrzeuge (7) derselben Längenkategorie auf den Stellplatzreihen (11) quer zur Fahrtrichtung des Fahrzeuges abzustellen. Die beiden flächenbeweglichen Abstützungen (4) fahren jeweils endseitig am Kraftfahrzeug (7) mit geringen Abstand außen vorbei. Dies ist besonders vorteilhaft, da somit auch schwere Kraftfahrzeuge aufgenommen werden können und gleichzeitig wenig Platz links und rechts neben dem Kraftfahrzeug (7) beim Einlagern quer zur Fahrtrichtung benötigt wird. Die beiden Gabelpaare (3) unterfahren im geöffneten Zustand jeweils links und rechts neben den Reifen (8) das Kraftfahrzeug (7). Nachdem das Kraftfahrzeug (7) von der Seite unterfahren wurde, werden die beiden Gabelpaare (3) an die Reifen (8) auf Kontakt gefahren, z. B. durch je eine elektrisch angetriebene Spindel, welche mit einer Linearführung gelagert ist. Das Kraftfahrzeug (7) wird anschließend durch je eine Hubeinheit (9), z.B. einen elektrischen Spindelheber, an der jeweils ein Gabelpaar (3) angebracht ist, angehoben und zu seinem durch die Länge des Kraftfahrzeuges (7) definierten Stellplatz (10) transportiert.

Das flächenbewegliche fahrerlose Transportmittel (1) bewegt sich nach der Aufnahme des Kraftfahrzeuges (7) flächenbeweglich und ist somit baulich nicht fixiert und kann sich deshalb frei zwischen den Systembereichen, z.B. verschiedenen Ebenen eines Parkhauses, bewegen. Mehrere flächenbewegliche fahrerlose Transportmittel (1) können auf diese Weise in einem Systembereich parallel arbeiten. Dies ist besonders vorteilhaft, da sich durch den Einsatz von mehreren fahrerlosen Transportmitteln geringere Wartezeiten für das Aus- und Einlagern von Kraftfahrzeugen (7) ergeben, selbst wenn die Kraftfahrzeuge (7) gleichzeitig aus dem selben Systembereich angefordert werden. Die fahrerlosen Transportmittel können den Auslagerprozess von n Kraftfahrzeugen (7) in 1...n Stellplatzreihen, 1...n Stellplatzspalten und in 1...n Ebenen in koordinierter Zusammenarbeit erledigen. Eine zentrale Steuerung vergibt dementsprechende Aufträge und navigiert die einzelnen Kraftfahrzeuge (7) mit dem flächenbeweglichen fahrerlosen Transportmittel (1) nacheinander zu einem errechneten Stellplatz (10) einer bestimmten Stellplatzreihe. Die flächenbeweglichen fahrerlosen Transportmittel (1) können durch einen bekannten Aufzug inklusive des Kraftfahrzeuges (7) von Ebene 0 bis Ebene n transportiert werden. In einem Systembereich können n Aufzüge zur Verfügung stehen, welche die flächenbeweglichen fahrerlosen Transportmittel (1) mit oder ohne Kraftfahrzeug (7) zwischen den n Ebenen transportieren.

Ebenso ist es vorteilhaft, dass bei einer Systemstörung oder einem Systemausfall eines flächenbeweglichen fahrerlosen Transportmittels (1) in einem Systembereich offen stehende Transportaufträge durch flächenbewegliche fahrerlose Transportmittel (1) vom selben oder einem anderen Systembereich übernommen werden können.

Vorteilhaft bei der Aufnahme von Kraftfahrzeugen (7) quer zur Fahrtrichtung ist, dass sich die flächenbeweglichen fahrerlosen Transportmittel (1) zur Anpassung des Abstandes zwischen den Abstützungen (4) durch eine Verschiebeeinheit (5) auf die Lange des Kraftfahrzeuges (7) einstellen lassen. Ebenso ist es sehr von Vorteil, dass die Kraftfahrzeuge (7) mit Hilfe der Gabelpaare (3) direkt von Stellflächen aufgenommen werden können und dementsprechend direkt auf Stellflächen abgestellt werden können.

Bevor das Kraftfahrzeug (7) durch das flächenbewegliche fahrerlose Transportmittel (1) aufgenommen wird, wird es durch eine Messeinheit (6) vermessen und den verschiedenen Längenkategorien zugeordnet. Die Stellplätze (10 und 11) sind quer zur Fahrtrichtung angeordnet in 1...n Stellplatzreihen für unterschiedliche Fahrzeuglängen und 1....n Stellplatzspalten. Die Kraftfahrzeuge (7) werden in 1...n Stellplatzreihen und 1...n Stellplatzspalten abgestellt. Entsprechend der Längenkategorie und unter Berücksichtigung von Besucherprofilen und der Parkdauer wird dem Kraftfahrzeug (7)ein Stellplatz (10) zugeordnet. Das flächenbewegliche fahrerlose Transportmittel (1) transportiert das Kraftfahrzeug (7) zu dem definierten Stellplatz (10) und stellt das Kraftfahrzeug (7) quer zur Fahrtrichtung des Kraftfahrzeuges (7) ab. Insbesondere ist es günstig, die Kraftfahrzeuge (7) Bug an Heck in Fahrtrichtung des Kraftfahrzeuges (7) in den Stellplatzspalten abzustellen. Dabei ist es auch möglich, Kraftfahrzeuge (7) kleinerer Längenkategorien auf Stehplätzen (11) der größeren Längenkategorien abzustellen.

Zum Abstellen des Kraftfahrzeuges wird das Verfahren des Aufnehmens wie oben beschrieben in umgekehrter Reihenfolge durchgeführt. Die Gabeln der Gabelpaare geben also die Räder durch horizontales Verschieben der einzelnen Gabeln (2) gegeneinander frei. Die sich horizontal erstreckenden Gabelpaare ziehen sich dann nach einer Seite des Kraftfahrzeugs (7) zurück, wobei die jeweils einseitig angeordneten flächenbeweglichen Abstützungen (4) beim Zurückfahren an dem Kraftfahrzeug (7) front- und heckseitig mit geringem Abstand vorbeifahren.

Der Auslagervorgang beginnt, wenn der Fahrer das Kraftfahrzeug (7) anfordert. Dieser Vorgang wird möglichst benutzerfreundlich organisiert: Der Fahrer fordert sein abgestelltes Kraftfahrzeug (7) beispielsweise über Anwendungen auf Mobilfunktelefonen, ein Kundencenter, das Bezahlterminal an der Parkanlage oder Web-Applikationen an und legt einen Abholzeitpunkt fest, so dass das Kraftfahrzeug (7) termingerecht zur Verfügung steht. Ist der Fahrer ein registrierter Kunde bei der Parkanlage und hat er z.B. einer automatischen Verrechnung zugestimmt, wird dem Fahrer die Übergabestation mitgeteilt und die Parkgebühr automatisch verrechnet. Muss die Parkgebühr an der automatischen Parkanlage entrichtet werden, wird das Kraftfahrzeug (7) erst zur Auslagerung freigegeben, wenn die Parkgebühr entrichtet ist.

Beim Ausparken erhält das flächenbewegliche fahrerlose Transportmittel (1) einen Auftrag über das Aufnehmen des abgestellten Kraftfahrzeugs (7) quer zur Fahrtrichtung und transportiert dieses zu der definierten Übergabestation. In der Übergabestation wird das Kraftfahrzeug (7) so abgestellt, dass der Fahrer die Übergabestation in Fahrtrichtung verlassen kann.

Sehr von Vorteil bei den fahrerlosen Transportmitteln (1) ist, dass diese auch in schon existierende Parkhäuser nachträglich installiert werden können. Ein weiterer Vorteil dieses Systems ist das Parken und Abstellen von Kraftfahrzeugen auf befahrbaren Stellflächen, somit ist es möglich in einer besonderen Situation Kraftfahrzeuge (7) manuell aus der Parkgarage auszulagern.

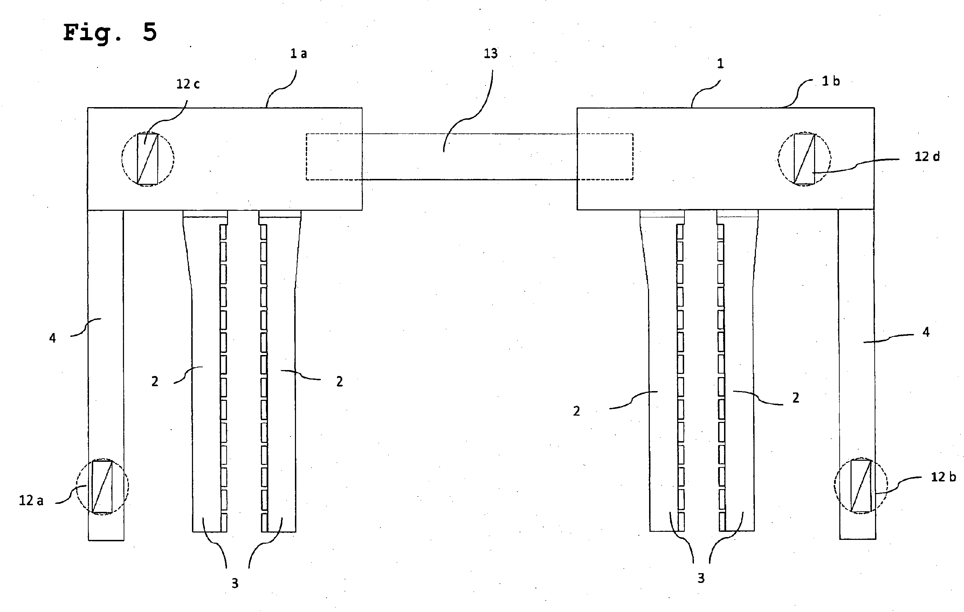

Figur 5 zeigt eine Draufsicht auf ein erfindungsgemäßes fahrerloses Transportmittel, in dem einige vorteilhafte Weiterbildungen der Erfindung verwirklicht sind. Das in Figur 5 gezeigte fahrerlose Transportfahrzeug weist vier Räder (12a), (12b), (12c), (12d) auf, welche sich vorteilhaft um 360° drehen lassen.

In einer vorteilhaften Ausgestaltung weist das fahrerlose Transportmittel (1) einen Balken (13) auf, der zwischen zwei Hauptkörpern (1a) und (1b) angeordnet ist und eine Längenverstellung der Gesamtlänge des fahrerlosen Transportfahrzeuges (1) ermöglicht. Hierzu kann der Balken (13) in eines oder beide der Hauptkörper Teile (1a) bzw. (1b) des fahrerlosen Transportfahrzeuges (1) eingefahren werden, vorzugsweise soweit, dass sich die Hauptkörper (1a) und (1b) im maximal eingefahrenen Zustand berühren. Es ist dabei vorteilhaft, wenn der Balken in beide Hauptkörper (1a) und (1b) gleichweit einfahrbar ist, da sich hierdurch die größte Längenänderung der Gesamtlänge des fahrerlosen Transportfahrzeuges (1) erzielen lässt.

Zur Veränderung der Länge durch verschieben der Hauptkörper (1a) und (1b) zueinander kann auf dem Balken (13) ein Zahnriemen, der in der Figur nicht gezeigt ist, angebracht sein, der mit einem Motor angetrieben werden kann. Besonders vorteilhaft kann der Motor im Momentbetrieb gefahren werden, so dass er die auftretenden Reibungskräfte an den Linearführungen gerade kompensiert. Das bedeutet, dass der Balken ohne Widerstand und ohne das Auftreten von zusätzlichen Kräften bewegt werden kann. Der Zahnriemen kann hierbei jeweils an einer Seite fest mit dem Hauptkörper verbunden sein. Alternativ können anstelle des Zahnriemens auch Zahnstangen, Spindeln oder Seilzüge verwendet werden, um die Längenänderung zu bewirken.

Die Lösung, den Motor zum Verstellen der Länge im Momentbetrieb zu fahren, erlaubt es, die Länge dadurch zu ändern, dass die beiden Hauptkörper (1a) und (1b) über ihre jeweiligen Räder (12a), (12b), (12c) und (12d) unterschiedlich in Richtung einer Längsrichtung des Balkens (13) angetrieben werden. Hierdurch können die Hauptkörper (1a) und (1b) aufeinander zu oder voneinander weg bewegen. Die Längenänderung ist auch vollkommen ohne einen Antrieb am Balken (13) realisierbar. In diesem Falle können die an der Führung des Balkens (13) auftretenden Kräfte ebenfalls durch unterschiedlichen Antrieb der Räder der beiden Hauptkörper (1a) und (1b) kompensiert werden.

Von den gezeigten Rädern können jene zwei Räder (12c) und (12d) in den Hauptkörpern (1a) bzw. (1b) jeweils angetrieben sein. Auch die Lenkung der Räder kann aktiv über einen Lenkmotor an dem jeweiligen Rad angetrieben sein. Die Räder (12a) und (12b) an den Auslegern (4) können passiv sein und frei drehbar, sie können aber auch aktiv ansteuerbar sein. Diese unabhängige Steuerbarkeit der Räder ermöglicht die oben beschriebene Längenveränderung.

Fahrmanöver können beispielhaft mit dem erfindungsgemäßen fahrerlosen Transportfahrzeug (1) wie folgt durchgeführt werden. In Querfahrt, also bei Fahrt in Richtung eines neben dem Transportfahrzeug (1) angeordneten PKW, bspw. zum Aufnehmen eines PKWs, können zwei bzw. vier der Räder (12a) bis (12d) aktiv so verstellt werden, dass sich die zwei Hauptkörper (1a) und (1b) des fahrerlosen Transportfahrzeuges aufeinander zu bewegen und es somit zu einer Längenverstellung des Fahrzeuges (1) kommt. Hierbei sollen vorzugsweise mindestens zwei Räder angesteuert werden, die sich gegenüber oder kreuzweise gegenüber liegen. Zwei weitere Räder können sich passiv selbst ausrichten. Auch eine Ansteuerung aller Räder ist möglich. Zu Beginn der Querfahrt stellen sich alle Räder (12a) bis (12d) parallel zueinander, während der Fahrt können die Räder nun gegeneinander verdreht werden mit gleichem Winkel, aber in entgegengesetzter Richtung. Hierdurch fahren die zwei Hauptkörper (1a) und (1b) auseinander oder aufeinander zu, um sich der Länge des Fahrzeuges anzupassen.

Bei Bewegung in Längsrichtung, also bspw. beim aufgenommenen PKW in Fahrtrichtung des PKWs, kann das fahrerlose Transportfahrzeug (1) ebenfalls durch verschiedene Manöver längenverstellt werden. Zum Beispiel kann während der Fahrt einer der Hauptantriebe eines der Räder (12c) bis (12d) etwas langsamer fahren oder etwas schneller als die anderen Räder, so dass die beiden Hauptkörper (1a) und (1b) mit unterschiedlicher Geschwindigkeit bewegen, und sich daher relativ zueinander bewegen. Es kommt also zu einer Längenverstellung. Es ist aber auch möglich, aus dem Stillstand die Länge zu verstellen, indem man entweder mit den zwei Hauptantrieben der Räder (12c) und (12d) in entgegengesetzter Richtung fährt oder eines der Räder (12c) bzw. (12d) stehen bleibt, während sich das andere Rad auf dieses zu bewegt oder von ihm wegbewegt.

Da das Fahrzeug flächenbeweglich ist, sind auch weitere Fahrmanöver möglich, die zu einer Änderung der Länge des fahrerlosen Transportfahrzeuges (1) führen. Im Grunde ist es möglich, während jedem beliebigen Fahrmanöver die Länge zu verstellen, indem die Räder so angesteuert werden, dass sich entweder die Geschwindigkeit ändert oder dass die Bahnkurven der Räder sich aufeinander zu bewegen oder voneinander entfernen.

Die Anwendung der Erfindung ist nicht beschränkt auf automatische Parkhäuser zum Einstellen der Kraftfahrzeuge von Verkehrsteilnehmern. Auch die Anwendung für ein platzsparendes Zwischenlagern und Bereitstellen im Zusammenhang mit der Produktion und dem Vertrieb von Kraftfahrzeugen ist vorteilhaft.

## Patentansprüche

1. Vorrichtung zum Einlagern eines Kraftfahrzeuges (7) quer zu seiner Längsachse auf einem Stellplatz einer Lagereinrichtung, mit einem flächenbeweglichen, fahrerlosen Transportmittel (1), das bei Aufnahme des Kraftfahrzeuges (7) parallel zur Längsachse des Kraftfahrzeuges (7) angeordnet ist und daran einseitig und senkrecht angeordnete, sich horizontal erstreckende Gabelpaare (3) aufweist, wobei die Gabeln (2) der Gabelpaare (3) einzeln horizontal entlang des Transportmittels verschiebbar sind und wobei die Gabelpaare (3) von einer Seite des Kraftfahrzeuges (7) aus Räder (8) jeweils einer Fahrzeugachse unterfahren, um durch Verschieben der einzelnen Gabeln (2) horizontal gegeneinander die Räder (8) zu greifen, worauf das Kraftfahrzeug (7) zum Transportieren angehoben wird, wobei eine Messeinrichtung (6) vor der Aufnahme des Kraftfahrzeuges (7) dessen Länge, Achspositionen und der Position des Kraftfahrzeuges (7) im Raum ermittelt,
**dadurch gekennzeichnet,**
**dass** an dem Transportmittel (1) jeweils endseitig flächenbewegliche Abstützungen (4) angeordnet sind, die sich horizontal und parallel zu den Gabelpaaren (3) erstrecken und beim Unterfahren der Räder (8) durch die Gabelpaare (3) an dem Kraftfahrzeug (7) front- und heckseitig mit geringem Abstand vorbeifahren, dass der Abstand zwischen den Abstützungen (4) verstellbar ist, dass das flächenbewegliche, fahrerlose Transpörtmittel (1) mit den von der Messeinrichtung (6) übermittelten Daten seine durch den Abstand der Abstützungen (4) bestimmte Länge und die Position der Gabelpaare (3) selbsttätig an die Maße des aufzunehmenden Kraftfahrzeuges (7) anpasst, und dass die beim Anheben des Kraftfahrzeuges (7) aufgenommene Belastung einerseits durch das Transportmittel (1) und andererseits durch die flächenbeweglichen Abstützungen (4) auf die Fahrfläche übertragen wird.

2. Vorrichtung nach Anspruch 1, **dadurch gekennzeichnet, dass** das flächenbewegliche fahrerlose Transportmittel (1) mindesten eine Verschiebeeinheit (5) zur Anpassung des Abstandes zwischen den flächenbeweglichen Abstützungen (4) an die Länge des aufzunehmenden Kraftfahrzeuges (7) aufweist.

3. Vorrichtung nach Anspruch 2, **dadurch gekennzeichnet, dass** eine Verschiebeeinheit (5) zwischen einer der Abstützungen (4) und dem Transportmittel (1) zur horizontalen Verschiebung der Abstützung (4) entlang des Transportmittels (1) angeordnet ist, und dass die andere Abstützung (4) mit dem Transportmittel (1) fest verbunden ist.

4. Vorrichtung nach einem der Anspruche 1 bis 3, **dadurch gekennzeichnet, dass** das Anheben des Kraftfahrzeuges (7) durch vertikales Verschieben der an den Rädern (8) anliegenden Gabelpaare (3) mittels Hubeinheiten (9) erfolgt, wobei je eine Hubeinheit (9) für jedes Gabelpaar (3) an dem Transportmittel (1) angeordnet ist.

5. Verfahren zum Einlagern eines Kraftfahrzeuges (7) quer zu seiner Längsachse auf einem Stellplatz (10, 11) einer Lagereinrichtung, bei dem das Kraftfahrzeug durch an einem flächenbeweglichen, fahrerlosen Transportmittel (1) einseitig und senkrecht angeordnete, sich horizontal erstreckende Gabelpaare (3) von der Seite des Kraftfahrzeuges (7) aus an Rädern (8) jeweils einer Fahrzeugachse unterfahren wird, wobei die Gabeln (2) der Gabelpaare (3) durch horizontales Verschieben der einzelnen Gabeln (2) gegeneinander die Räder (8) greifen, bei dem an dem Transportmittel (1) jeweils endseitig angeordnete flächenbewegliche Abstützungen (4), die sich horizontal und parallel zu den Gabelpaaren (3) erstrecken, beim Unterfahren der Räder (8) durch die Gabelpaare (3) an dem Kraftfahrzeug (7) front- und heckseitig mit geringen Abstand vorbeifahren, bei dem durch eine Messeinrichtung (6) vor der Aufnahme des Kraftfahrzeuges (7) dessen Länge, Achspositionen und der Position des Kraftfahrzeuges (7) im Raum ermittelt, um mit den an das flächenbewegliche fahrerlose Transportmittel (1) übermittelten Daten selbsttätig den Abstand zwischen den Abstützungen (4), welcher verstellbar ist, und die Position der Gabelpaare (3) an die Maße des Kraftfahrzeuges (7) anzupassen, bei dem die aufgenommene Belastung einerseits durch das Transportmittel (1) und andererseits durch die Abstützungen (4) auf die Fahrfläche übertragen wird, und bei dem das flächenbewegliche fahrerlose Transportmittel (1) das angehobene Kraftfahrzeug (7) zu dem vorgesehenen Stellplatz (10, 11) der Lagereinrichtung transportiert und dort in umgekehrter Reihenfolge der Verfahrensabläufe abstellt.

6. Verfahren nach Anspruch 5, **dadurch gekennzeichnet dass** das Anheben des Kraftfahrzeuges (7) durch vertikales Verschieben der an den Rädern (8) anliegenden Gabelpaaren (3) mittels zwischen jedem Gabelpaar (3) und dem Transportmittel (1) angeordneten Hubeinheiten (9) erfolgt.

7. Verfahren nach einem der Ansprüchen 5 oder 6, **dadurch gekennzeichnet, dass** das flächenbewegliche fahrerlose Transportmittel (1) die aufgenommenen Kraftfahrzeuge (7) mehrfachtief und nebeneinander auf Stellplätzen (10, 11) der Lagereinrichtung einlagert.

## Claims

1. Device for storing a motor vehicle (7) laterally with respect to its longitudinal axis on a space of a storage device, having a driverless transportation means (1) that can be moved on its surface, said transportation means being arranged parallel to the longitudinal axis of the motor vehicle (7) when receiving the motor vehicle (7), and having horizontally extending lifting fork pairs (3) arranged thereon on one side and vertically, wherein the forks (2) of the lifting fork pairs (3) can individually be displaced horizontally along the transportation means, and wherein the lifting fork pairs (3) are driven under wheels (8) of a respective vehicle axle from one side of the motor vehicle (7), in order to grasp the wheels (8) by displacing the individual forks (2) horizontally against each other, whereupon the motor vehicle (7) is raised for transportation, wherein a measuring device (6) determines, before the motor vehicle is received (7), its length, axle positions and the position of the motor vehicle (7), in the space,
**characterised in that**,
supports (4) that can be moved on their surface are arranged on the transportation means (1) on the respective end side, said supports extending horizontally and parallel to the lifting fork pairs (3) and driving past the motor vehicle (7) on the front and rear side at a small distance away when the wheels (8) are driven under by the lifting fork pairs (3), the distance between the supports (4) can be adjusted, the driverless transportation means (1) that can be moved on its surface, with the data communicated by the measuring device (6), automatically adapts its length determined by the spacing of the supports (4) and the position of the lifting fork pairs (3) to the dimensions of the motor vehicle (7) that is to be received, and the load absorbed when raising the motor vehicle (7) is transferred to the driving surface by the transportation means (1) on one side and by the supports (4) that can be moved on their surface on the other side.

2. Device according to claim 1, **characterised in that** the driverless transportation means (1) that can be moved on its surface has at least one displacement unit (5) for adapting the distance between the supports (4) that can be moved on their surface to the length of the motor vehicle (7) that is to be received.

3. Device according to claim 2, **characterised in that** a displacement unit (5) is arranged between one of the supports (4) and the transportation means (1) for the horizontal displacement of the support (4) along the transportation means (1), and the other support (4) is connected fixedly to the transportation means (1).

4. Device according to one of claims 1 to 3, **characterised in that** the raising of the motor vehicle (7) takes place by vertical displacement of the lifting fork pairs (3) lying against the wheels (8) by means of lifting units (9), wherein a respective lifting unit (9) is arranged on the transportation means (1) for each lifting fork pair (3).

5. Method for storing a motor vehicle (7) laterally with respect to its longitudinal axis on a space (10, 11) of a storage device, in which the motor vehicle is driven under by lifting fork pairs (3) that are arranged on one side and vertically on a driverless transportation means (1) that can be moved on its surface, and which extend horizontally, from the side of the motor vehicle (7), on wheels (8) of a respective vehicle axle, wherein the forks (2) of the fork pairs (3) grasp the wheels (8) by horizontal displacement of the individual forks (2) against each other, wherein supports (4) that can be moved on their surface are arranged on the transportation means (1) on the respective end side, said supports extending horizontally and parallel to the lifting fork pairs (3) and driving past the motor vehicle (7) on the front and rear side at a small distance away, wherein its length, axle positions and the position of the motor vehicle (7) in the space are determined by a measuring device (6) before the motor vehicle (7) is received, in order to automatically adapt the distance between the supports (4) using the data communicated to the driverless transportation means (1) that can be moved on its surface, said supports being adjustable, and to adapt the position of the lifting fork pairs (3) to the dimensions of the motor vehicle (7), wherein the absorbed load is transferred to the driving surface by the transportation means (1) on one side and by the supports (4) on the other side, and wherein the driverless transportation means (1) that can be moved on its surface transports the raised motor vehicle (7) to the space (10, 11) of the storage device provided and parks there in the reverse sequence of the procedure.

6. Method according to claim 5, **characterised in that** the raising of the motor vehicle (7) takes place by vertical displacement of the lifting fork pairs (3) lying against the wheels (8) by means of lifting units (9) arranged between each fork pair (3) and the transportation means (1).

7. Method according to one of claims 5 or 6, **characterised in that** the driverless transportation means (1) that can be moved on its surface stores the received motor vehicles (7) at multiple depths and alongside one another on spaces (10, 11) of the storage device.

## Revendications

1. Dispositif permettant le parcage d'un véhicule à moteur (7) dans le sens transversal par rapport à son axe longitudinal sur une place d'une installation d'entreposage, comprenant un moyen de transport (1) sans conducteur et mobile en surface, qui est agencé parallèlement à l'axe longitudinal du véhicule à moteur (7) au moment de la prise en charge du véhicule à moteur (7) et qui présente des paires de fourches (3) s'étendant horizontalement, agencées d'un seul côté et perpendiculairement à celui-ci, les fourches (2) des paires de fourches (3) pouvant être déplacées individuellement dans le sens horizontal le long du moyen de transport et que les paires de fourches (3) passent sous des roues (8) d'un essieu respectif du véhicule depuis un côté du véhicule à moteur (7) afin de saisir les roues (8) par le biais du déplacement des fourches (2) individuelles horizontalement l'une contre l'autre, ce par quoi le véhicule à moteur (7) est soulevé aux fins de transport, un dispositif de mesure (6) déterminant, avant la prise en charge du véhicule à moteur (7), sa longueur, la position de ses essieux et la position du véhicule à moteur (7) dans l'espace,
**caractérisé en ce que**
sur le moyen de transport (1) sont respectivement agencés, du côté des extrémités, des supports (4) mobiles en surface qui s'étendent horizontalement et parallèlement aux paires de fourches (3) et qui, au moment du passage sous les roues (8) par les paires de fourches (3), passent à une faible distance devant l'avant et l'arrière du véhicule à moteur (7), **en ce que** l'écartement entre les supports (4) peut être réglé, **en ce que** le moyen de transport (1) sans conducteur et mobile en surface adapte automatiquement sa longueur déterminée par l'écartement des supports (4) et la position des paires de fourches (3) aux dimensions du véhicule à moteur (7) qui doit être pris en charge en fonction des données transmises par le dispositif de mesure (6), et **en ce que** la charge supportée lors du levage du véhicule à moteur (7) est transférée à la surface de roulement, d'une part, par le biais du moyen de transport (1) et, d'autre part, par le biais des supports mobiles en surface.

2. Dispositif selon la revendication 1, **caractérisé en ce que** le moyen de transport (1) sans conducteur et mobile en surface présente au moins une unité de déplacement (5) permettant d'adapter l'écartement entre les supports (4) mobiles en surface à la longueur du véhicule à moteur (7) qui doit être pris en charge.

3. Dispositif selon la revendication 2, **caractérisé en ce qu'**une unité de déplacement (5) est agencée entre l'un des supports (4) et le moyen de transport (1) en vue du déplacement horizontal du support (4) le long du moyen de transport (1), et **en ce que** l'autre support (4) est assemblé de façon fixe avec le moyen de transport (1).

4. Dispositif selon l'une des revendications 1 à 3, **caractérisé en ce que** le levage du véhicule à moteur (7) est réalisé par le biais du déplacement vertical des paires de fourches (3) situées au niveau des roues (8) au moyen d'unités de levage (9), une unité de levage (9) étant respectivement agencée sur le moyen de transport (1) pour chaque paire de fourches (3).

5. Procédé permettant le parcage d'un véhicule à moteur (7) dans le sens transversal par rapport à son axe longitudinal sur une place (10, 11) d'une installation d'entreposage, dans lequel des paires de fourches (3) s'étendant horizontalement, agencées d'un seul côté et perpendiculairement à un moyen de transport (1) sans conducteur et mobile en surface, passent sous le véhicule à moteur au niveau de roues (8) d'un essieu respectif du véhicule depuis un côté du véhicule à moteur (7), les fourches (2) des paires de fourches (3) saisissant les roues (8) par le biais d'un déplacement horizontal des fourches (2) individuelles l'une contre l'autre, dans lequel des supports (4) mobiles en surface, agencés respectivement sur le moyen de transport (1) du côté des extrémités, qui s'étendent horizontalement et parallèlement aux paires de fourches (3), passent à une faible distance devant le véhicule à moteur (7) du côté de l'avant et de l'arrière au moment du passage sous les roues (8) par les paires de fourches (3), dans lequel avant la prise en charge du véhicule à moteur (7), sa longueur, la position de ses essieux et la position du véhicule à moteur (7) dans l'espace sont déterminées au moyen d'un dispositif de mesure (6) afin d'adapter automatiquement, en fonction des données transmises au moyen de transport (1) sans conducteur et mobile en surface, l'écartement entre les supports (4), qui peut être réglé, et la position des paires de fourches (3) aux dimensions du véhicule à moteur (7), dans lequel la charge supportée est transférée à la surface de roulement, d'une part, par le biais du moyen de transport (1) et, d'autre part, par le biais des supports (4), et dans lequel le moyen de transport (1) sans conducteur mobile en surface transporte le véhicule à moteur (7) soulevé jusqu'à la place (10, 11) prévue de l'installation d'entreposage et le dépose à cet endroit en répétant les étapes du procédé dans l'ordre inverse.

6. Procédé selon la revendication 5, **caractérisé en ce que** le levage du véhicule à moteur (7) est réalisé par le biais du déplacement vertical des paires de fourches (3) situées au niveau des roues (8) au moyen d'unités de levage (9) agencées entre chaque paire de fourches (3) et le moyen de transport (1).

7. Procédé selon l'une des revendications 5 ou 6, **caractérisé en ce que** le moyen de transport (1) sans conducteur et mobile en surface parque les véhicules à moteur (7) pris en charge à plusieurs niveaux de profondeur et les uns à côtés des autres sur des places (10, 11) du parking.
